# FASCICULE DE BREVET EUROPEEN

(11) **EP 0 993 216 B1**
(45) Date de publication et mention de la délivrance du brevet: **15.11.2006**
(21) Numéro de dépôt: 99402325.7
(22) Date de dépôt: 23.09.1999
(51) Int. Cl.: H04Q 11/00, H04L 12/56

(54) **Matrice de commutation ATM comportant un noyau optique passif**
ATM Schaltmatrix mit einem passiven optischen Kern
ATM switch matrix having a passive optical core

(30) Priorité: 08.10.1998 FR 9812610
(43) Date de publication de la demande: 12.04.2000
(73) Titulaire: ALCATEL, 75008 Paris (FR)
(72) Inventeur: Vinel, Paul, 78140 Velizy (FR); Parmentier, Pierre, 91400 Saclay (FR)
(74) Mandataire: Sciaux, Edmond

(56) Documents cités:
- US-A- 5 303 078
- DUAN G -H ET AL: "ANALYSIS OF ATM WAVELENGTH ROUTING SYSTEMS BY EXPLORING THEIR SIMILITUDE WITH SPACE DIVISION SWITCHING" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, vol. 3, 23 juin 1996 (1996-06-23), pages 1783-1787, XP000625113 INSTITUTE OF ELECTRICAL & ELECTRONICS ENGINEERS ISBN: 0-7803-3251-2

## Description

L'invention concerne une matrice de commutation ATM comportant un noyau optique passif. Les matrices connues, de ce type, ont pour inconvénient de comporter des mémoires tampons constituées de tronçons de fibre optique pour stocker des cellules en utilisant le fait que les signaux mettent un certain temps pour les parcourir. Ces tronçons de fibre optique sont encombrants. Ils constituent donc une limite physique à la réalisation de telles matrices.

Le document US-A-5 303 078 décrit une matrice ATM suivant le préambule de la revendication 1. Ce type de matrice présente cependant des problèmes de contention en particulier sur les ports de sortie.

Le but de l'invention est de remédier à cet inconvénient.

L'objet de l'invention est une matrice de commutation ATM comportant n ports d'entrée, un noyau optique passif, et n ports de sortie comportant chacun une mémoire tampon électronique ; la matrice étant structurée
- en ce que chaque port d'entrée comporte :
   -- une entrée couplée à une entrée de la matrice ;
   -- au moins p sorties, p étant inférieur ou égal à n ;
   -- une source de lumière accordable pour émettre un signal optique transportant des cellules reçues sur une entrée de la matrice ;
   -- des moyens de commutation pour acheminer le signal optique émis par la source vers au moins une des p sorties de ce port d'entrée ;
- en ce qu'il comporte en outre des moyens d'accord pour comman-der l'accord de la source de lumière accordable de chaque port d'entrée, de façon que sa longueur d'onde corresponde à la sortie de la matrice qui est la destination de la cellule en cours de réception par le port d'entrée considéré ;
- en ce que le noyau optique passif comporte au moins p coupleurs optiques, chaque coupleur ayant 2n accès, n d'entre eux étant respectivement connectés à une sortie de chacun des n ports d'entrée ;
- en ce que chaque port de sortie comporte :
   -- au moins p récepteurs optiques, qui sont accordés sur une même longueur d'onde fixée qui est propre à ce port de sortie, ces récepteurs ayant chacun une entrée reliée respectivement à un accès d'un des p coupleurs ;
   -- une mémoire tampon ayant p entrées respectivement couplées aux sorties des p récepteurs, et une sortie couplée à une sortie de la matrice ; et caractérisée
- en ce qu'elle comporte des moyens d'allocation répartis pour commander les moyens de commutation de chaque port d'entrée de façon à relier, à k coupleurs distincts, respectivement k ports d'entrée qui reçoivent à l'instant considéré k cellules destinées à un même port de sortie, k étant inférieur ou égal à p ; cette opération étant répétée pour chaque port de sortie.

La matrice ainsi caractérisée permet d'éviter l'utilisation de lignes à retard optiques parce que le stockage des cellules est assuré, au niveau des ports de sortie, dans des mémoires tampons électroniques, tout en permettant un routage performant par des moyens optiques couplant les ports d'entrée aux ports de sortie. Ces moyens optiques étant constitués de commutateurs optiques, de lasers accordables, de filtres, et de coupleurs passifs, ils procurent une transmission à haute vitesse et ne causent pas de déséquencement des cellules. Le fait d'utiliser p coupleurs passifs permet de transmettre jusqu'à p cellules vers un même port de sortie, au cours d'une même période de cellule. En augmentant p on peut réduire autant qu'on le souhaite le taux des pertes de cellules, dues à des contentions.

Selon un mode de réalisation préférentiel, la matrice est caractérisée en ce que les moyens d'allocation comportent :
- dans chaque port d'entrée, des moyens de requête pour émettre un message de demande d'allocation d'un coupleur, chaque fois qu'une cellule est reçue par ce port d'entrée, ce message étant émis sur la longueur d'onde propre au port de sortie qui est la destination de cette cellule, et ce message incluant l'identité de ce port d'entrée ;
- dans chaque port de sortie, des moyens pour recevoir un message de demande d'allocation d'un coupleur, émis sur une longueur d'onde propre à ce port de sortie et contenant l'identité d'au moins un port d'entrée demandeur ; des moyens pour décider d'allouer ou non un coupleur ; et des moyens pour émettre un message de réponse contenant l'identité du coupleur alloué, et adressé au port demandeur ;
- dans chaque port d'entrée, des moyens pour recevoir un message de réponse adressé à ce port d'entrée et pour commander les moyens de commutation de ce port d'entrée de façon à le relier au coupleur qui lui est alloué.

La matrice ainsi caractérisée a des performance élevée en ce qui concerne la vitesse de commutation, même pour un grand nombre d'entrées et de sorties, grâce au fait que les moyens d'allocation des coupleurs sont répartis dans tous les ports de sortie et tous les ports d'entrée de la matrice. Grâce à cette répartition, ils travaillent indépendamment pour chaque port de sortie et résolvent les problèmes de contention d'une manière décentralisée. Il y a donc un gain de temps de gestion qui est sensible quand la matrice est de grande taille.

L'invention sera mieux comprise et d'autres caractéristiques apparaîtront à l'aide de la description ci-dessous et des figures l'accompagnant :
- La figure 1 représente le schémas synoptique d'un premier exemple de réalisation de la matrice selon l'invention.
- La figure 2 représente le schémas synoptique d'un second exemple de réalisation de la matrice selon l'invention.

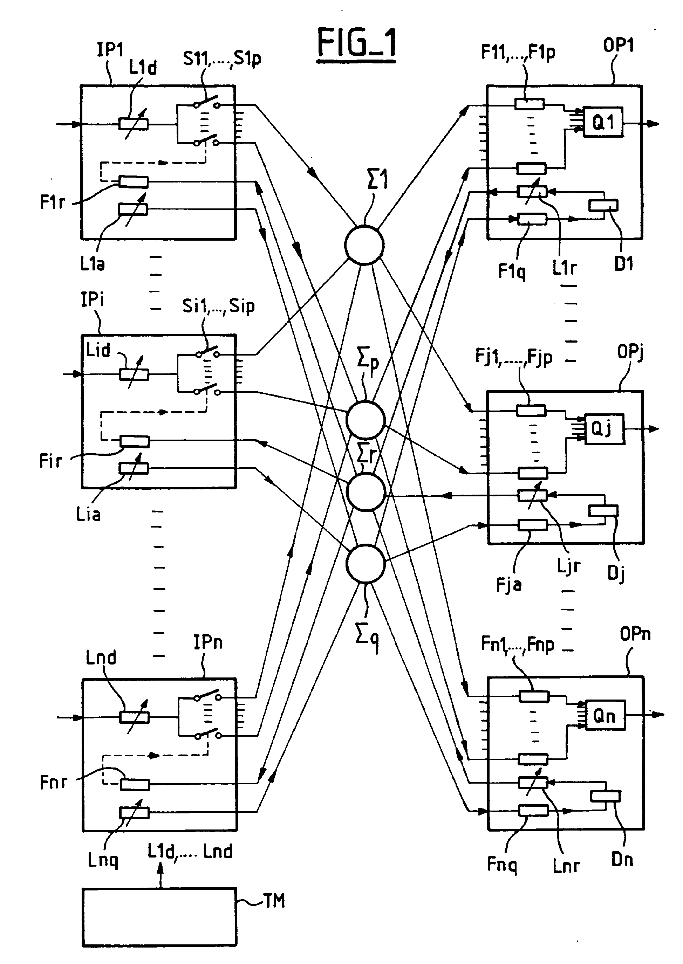

Le schémas de la **figure 1** représente un exemple de réalisation de la matrice selon l'invention, qui possède n entrées recevant chacune un multiplex ATM à très haut débit (622Mb/s, ou 2,45 Gb/s, ou plus) sous la forme d'un signal électrique ; et n sorties fournissant chacune un multiplex ATM à très haut débit sous la forme d'un signal électrique. Cet exemple de réalisation est constitué de :
- n ports d'entrée IP1,...,IPi, ... IPn ;
- un noyau optique passif constitué de p+2 coupleurs optiques passifs Σ1, ..., Σp, Σa Σr ; p étant inférieur ou égal à n ; chaque coupleur ayant 2n accès ;
- et n ports de sortie OP1,..., OPj,...OPn comportant chacun une mémoire tampon électronique, respectivement Q1, ...,Qj,...,Qn . Chaque port d'entrée, par exemple IPi, comporte :
   -- une entrée constituant une entrée de la matrice ;
   -- une entrée reliée à un accès du coupleur Σr ;
   -- p+1 sorties, p premières sorties étant reliées respectivement à un accès de chacun des coupleurs Σ1, ..., Σp, et la (p+1)ième sortie étant reliée à un accès du coupleur Σa ;
   -- une source de lumière accordable Lid pour émettre un signal optique transportant une cellule reçue par cette entrée de la matrice ;
   -- p commutateurs optiques Si1, ..., Sip susceptibles d'acheminer le signal optique émis par la source Lid vers au moins une des p premières sorties de ce port d'entrée ;
   -- un récepteur optique Fir accordé sur une longueur d'onde fixée propre à ce port d'entrée ;
   -- et une source de lumière accordable Lia reliée à la (p+1)ième sortie.
   Chaque port de sortie, par exemple OPj, comporte :
   -- au moins p récepteurs optiques accordables Fj1, ..., Fjp, qui sont accordés sur une même longueur d'onde fixée qui est propre à ce port de sortie, et qui ont chacun une entrée reliée respectivement à un accès d'un des p coupleurs Σ1, ...,Σp ;
   -- une mémoire tampon électronique Qj ayant p entrées respectivement couplées aux sorties des p récepteurs Fj1, ..., Fjp, et une sortie couplée à une sortie de la matrice ; cette mémoire étant susceptible de recevoir p cellules simultanément et de les stocker dans une file d'attente ;
   -- un récepteur optique Fja accordé sur une longueur d'onde fixée propre au port de sortie considéré, par exemple la même que celle des autres récepteurs Fj1, ..., Fjp de ce même port de sortie ; l'entrée de ce récepteur Fja étant reliée à un accès du coupleur Σa ;
   -- un circuit de décision Dj, ayant une entrée reliée à une sortie du récepteur Fja ;
   -- et un émetteur optique accordable Ljr ayant une entrée reliée à une sortie du circuit de décision Dj et ayant une sortie reliée à un accès du coupleur Σr.

Cet exemple de réalisation comporte en outre un dispositif d'accord TM pour commander l'accord de la source de lumière accordable L1d,..., Lid, ..., Lnd, de chacun des ports d'entrée IP1, ..., IPi, ..., IPn. Il reçoit des informations de signalisation, par des liaisons non représentées, et il choisit la longueur d'onde de chaque source L1d,..., Lid, ...,Lnd, de façon qu'elle soit égalé à la longueur d'onde propre au port de sortie qui est la destination de la cellule en cours de réception par le port d'entrée considéré. Tous les composants de la matrice reçoivent des signaux d'horloge fournis par une base de temps commune, non représentée.

Si pendant une période de cellule donnée, les n ports d'entrée reçoivent respectivement n cellules (ou moins) respectivement destinées à n ports de sortie distincts, il n'y a pas de problème de collision. Toutes ces cellules peuvent être acheminées par un seul coupleur optique, par exemple Σ1, puisqu'elles sont portées par n longueurs d'onde distinctes correspondant respectivement aux n ports de sortie OP1,..., OPj,...OPn.

Si pendant une période de cellule donnée, par exemple k ports d'entrée (avec k inférieur ou égal à p) reçoivent respectivement k cellules respectivement destinées à un même port de sortie, ces k cellules ne peuvent pas être acheminées par un même coupleur optique, il faut donc allouer un coupleur optique distinct à chaque cellule. Puisqu'il y a p coupleurs disponibles, Σ1, ..., Σp, il est possible d'acheminer simultanément p cellules vers un même port de sortie, mais pas plus.

p est choisi inférieur ou égal à n, selon le taux de perte de cellules que l'on admet. Si p est inférieur à n et si le nombre k est supérieur à p, il y a k-p cellules qui ne sont pas transmises et qui sont donc perdues, dans cet exemple.

L'allocation des coupleurs Σ1, ..., Σp, est réalisé par un dispositif réparti de manière égale dans tous les ports d'entrée IP1,...,IPi, ... IPn et dans tous les ports de sortie OP1,..., OPj,...OPn. Ce dispositif comporte :
- par exemple dans le port d'entrée IPi : le récepteur optique Fir qui est accordé sur une longueur d'onde fixée propre à ce port d'entrée, et l'émetteur optique accordable Lia ;
- et par exemple dans le port de sortie OPj : le récepteur optique Fja accordée sur une longueur d'onde fixée propre à ce port de sortie, le circuit de décision Dj, et la source optique accordable Ljr.

Lorsque le port d'entrée IPi reçoit une cellule destinée au port de sortie OPj, par exemple, le fonctionnement du dispositif réparti d'allocation de coupleurs est le suivant, dans ce premier exemple de réalisation :
- Le port IPi connaît, par la signalisation, la destination de la cellule qu'il reçoit. Il émet par l'émetteur optique Lia un message de demande d'allocation de coupleur qui est adressé au port de sortie OPj, en accordant l'émetteur Lia sur la longueur d'onde propre au port de sortie OPj. Afin que les messages de demande d'allocation émis au cours de la même période de cellule par différents ports d'entrée ne puisse pas entrer en collision dans le coupleur Σa, ces messages sont multiplexés temporellement dans une trame comportant n intervalles pouvant transporter chacun un bit. Cette trame est émise une fois par période de cellule. Chaque message est constitué par un seul bit de valeur 1 placé dans un intervalle temporel qui est propre au port d'entrée qui l'émet. Autrement dit, tous les ports d'entrée qui demandent l'allocation d'un coupleur émettent un bit de valeur 1, successivement au cours d'une même trame, transmise via le coupleur Σa qui est réservé à la transmission de ce type de message.
- Le récepteur Fja du port de sortie OPj reçoit le message et reconnaît qu'il provient du port d'entrée IPi grâce à la position temporelle du bit de valeur 1 constituant ce message. Il transmet l'identité du port IPi au circuit de décision Dj. Il fait de même pour chacun des messages qu'il reçoit ensuite au cours de la même trame, s'il y a plusieurs cellules destinées à ce même port de sortie. Le circuit de décision Dj alloue les coupleurs Σ1, ...,Σp selon un algorithme prédéterminé et classique, après la fin de la réception de la trame des messages de demande d'allocation. Cet algorithme consiste par exemple en un priorité tournante pour le choix des entrées, et une affectation aléatoire pour le choix des coupleurs.
- Puis le port de sortie OPj envoie une suite de bits de réponse, via le coupleur Σr. Afin que les bits de réponse émis au cours de la même période de cellule par différents ports de sortie ne puissent pas entrer en collision dans le coupleur Σr, ces bits sont multiplexés spectralement en accordant l'émetteur Ljr successivement sur les longueurs d'onde respectives des récepteurs optiques Fir, etc..., des ports d'entrée qui sont destinataires de ces bits. Chaque bit de réponse indique l'identité d'un coupleur différent choisi parmi Σ1, ..., Σp. Cette suite de bits de réponse constitue un mot de p bits. Le rang de chaque bit indique l'identité du coupleur alloué, et sa longueur d'onde indique le port d'entrée sélectionné. Par exemple, le circuit de décision Dj alloue le coupleur Σ1 au port d'entrée IPi pour la durée d'une période cellule. Il reste alors p-1 autres coupleurs Σ2, ..., Σp qu'il peut allouer à d'autres ports d'entrée qui ont demandé l'allocation d'un coupleur pour transmettre des cellules simultanément vers ce même port de sortie OPj.
- Enfin, les ports d'entrée concernés émettent respectivement leurs cellules, simultanément, via les coupleurs Σ1, ..., Σp, à destination du port de sortie OPj sur la longueur d'onde propre à ce port OPj . Des cellules en provenance d'autres ports d'entrée et destinées à d'autres ports de sortie sont transmises simultanément par ces même coupleurs sur d'autres longueurs d'onde.
Il est à remarquer que le dispositif d'allocation réparti travaille ainsi complètement indépendamment pour les différents ports de sortie. La complexité de la gestion réalisée au niveau de chaque port de sortie n'augmente donc pas proportionnellement à la taille de la matrice.

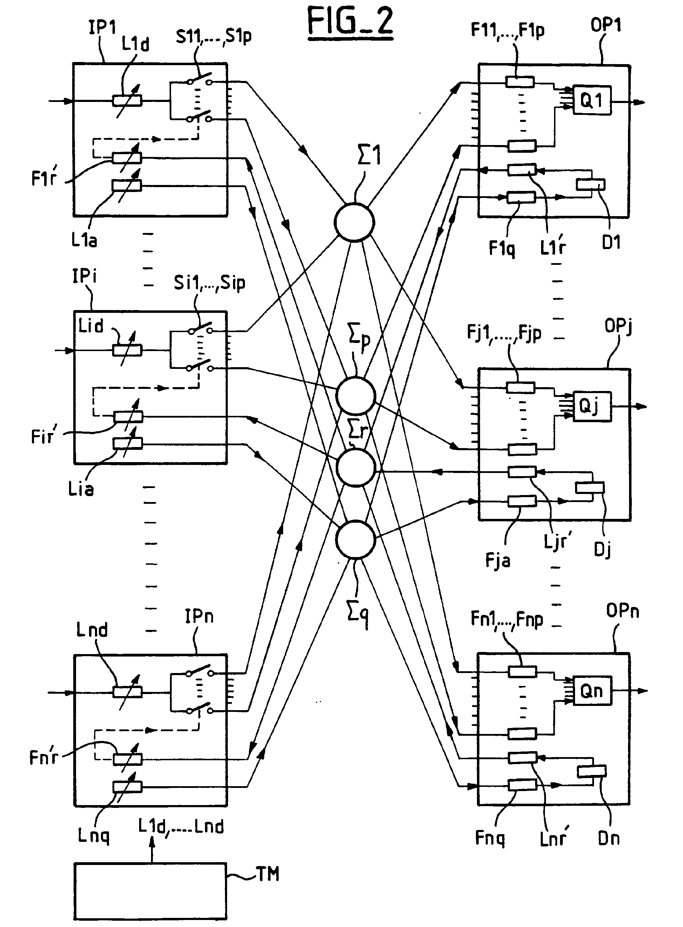

La **figure 2** représente un second exemple de réalisation de la matrice selon l'invention, dans lequel les émetteurs accordables L1r,..., Ljr, ..., Lnr des ports de sortie sont remplacés par des émetteurs à longueurs d'onde fixes, L1r',..., Ljr', ..., Lnr' ; et dans lequel les récepteurs à longueur d'onde fixe F1r,..., Fir,...,Fnr, sont remplacés par des récepteurs accordables F1r',..., Fir',...,Fnr'. les autres composants sont inchangés. Dans cette variante, chaque réponse est transmise sur la longueur d'onde propre au port de sortie qui répond, et chaque port d'entrée qui a demandé une allocation de coupleur au port de sortie OPj accorde son récepteur sur la longueur d'onde de ce port de sortie pour être en mesure de recevoir la réponse qu'il attend. Chaque réponse est constituée par une adresse de k bits, le nombre k étant choisi tel qu'il permette de désigner un port d'entrée quelconque parmi les n ports IP1, ..., IPn. Le coupleur sélectionné est indiqué par la position temporelle du mot de k bits.

Selon une autre variante de réalisation, non représentée, les messages de demande et les messages de réponse sont décalés dans le temps, et les deux coupleurs Σa et Σr peuvent alors être confondus.

Selon une autre variante de réalisation, non représentée, le jeu de n longueurs d'onde utilisé pour les demandes d'allocation et le jeu de n longueurs d'onde utilisé pour les réponses n'ont pas de valeurs communes, et les deux coupleurs Σa et Σr peuvent alors être confondus.

## Revendications

1. Matrice de commutation ATM comportant n ports d'entrée (IP1,..., IPn), un noyau optique passif (Σ1, ..., Σp, Σa, Σr), et n ports de sortie (OP1,..., OPn) comportant chacun une mémoire tampon électronique (Qj) ;
la matrice étant structurée
- en ce que chaque port d'entrée (IPi) comporte :
-- une entrée couplée à une entrée de la matrice ;
-- au moins p sorties, p étant inférieur ou égal à n ;
-- une source de lumière accordable (Lid) pour émettre un signal optique transportant des cellules reçues sur une entrée de la matrice ;
-- des moyens de commutation (Si1, ...,Sip) pour acheminer le signal optique émis par la source (Lid) vers au moins une des p sorties de ce port d'entrée ;
- en ce qu'elle comporte en outre des moyens d'accord (TM) pour commander l'accord de la source de lumière accordable (Lid) de chaque port d'entrée, de façon que sa longueur d'onde corresponde à la sortie de la matrice qui est la destination de la cellule en cours de réception par le port d'entrée considéré ;
- en ce que le noyau optique passif comporte au moins p coupleurs optiques (Σ1, ..., Σp) chaque coupleur ayant 2n accès, n d'entre eux étant respectivement connectés à une sortie de chacun des n ports d'entrée (IP1, ..., IPn) ;
- en ce que chaque port de sortie (OPj) comporte :
-- au moins p récepteurs optiques (Fj1,...,Fjp), qui sont accordés sur une même longueur d 'onde fixée qui est propre à ce port de sortie, ces récepteurs ayant chacun une entrée reliée respectivement à un accès d'un des p coupleurs (Σ1, ...,Σp) ;
-- une mémoire tampon (Qj) ayant p entrées respectivement couplées aux sorties des p récepteurs, et une sortie couplée à une sortie de la matrice ;
et **caractérisée en ce qu'**elle comporte des moyens d'allocation répartis (Fja, Ljr, Fir, Lia) pour commander les moyens de commutation (Si1, ...,Sip) de chaque port d'entrée (IPi) de façon à relier, à k coupleurs distincts, respectivement k ports d'entrée qui reçoivent à l'instant considéré k cellules destinées à un même port de sortie (OPj), k étant inférieur ou égal à p ; cette opération étant répétée pour chaque port de sortie.

2. Matrice selon la revendication 1, **caractérisée en ce que** les moyens d'allocation comportent :
- dans chaque port d'entrée (IPi), des moyens de requête (Lia) pour émettre un message de demande d'allocation d'un coupleur, chaque fois qu'une cellule est reçue par ce port d'entrée, ce message étant émis sur la longueur d'onde propre au port de sortie (OPj) qui est la destination de cette cellule, et ce message incluant l'identité de ce port d'entrée (IPi) ;
- dans chaque port de sortie (OPj), des moyens (Fja) pour recevoir un message de demande d'allocation d'un coupleur, émis sur une longueur d'onde propre à ce port de sortie et contenant l'identité d'au moins un port d'entrée demandeur ; des moyens (Dj) pour décider d'allouer ou non un coupleur ; et des moyens (Ljr ; Ljr') pour émettre un message de réponse contenant l'identité du coupleur alloué, et adressé au port demandeur ;
- dans chaque port d'entrée (IPi), des moyens (Fir ; Fir') pour recevoir un message de réponse adressé à ce port d'entrée et pour commander les moyens de commutation (SI1, ..., Sip) de ce port d'entrée de façon à le relier au coupleur qui lui est alloué.

## Claims

1. ATM switching matrix having n input ports (IP1, ..., IPn), a passive optical core (Σ1, ..., Σp, Σa, Σr) and n output ports (OP1, ..., OPn) each having an electronic buffer (Qj); the matrix being structured so that
- each input port (IPi) includes:
-- an input coupled to an input of the matrix,
-- at least p outputs, p being less than or equal to n,
-- a tunable light source (Lid) for emitting an optical signal transporting cells received at an input of the matrix,
-- switching means (Si1, ..., Sip) for routing the optical signal emitted by the source (Lid) to at least one of the p outputs of the input port,
- said matrix further includes tuning means (TM) for tuning the tunable light source (Lid) of each input port so that its wavelength corresponds to the output of the matrix which is the destination of the cell currently being received by the input port concerned,
- the passive optical core includes at least p optical couplers (Σ1, ..., Σp) each having 2n ports, n of which are respectively connected to an output of each of the n input ports (IP1, ..., IPn),
- each output port (OPj) includes:
-- at least p optical receivers (Fj1, ..., Fjp) which are tuned to the same fixed wavelength which is specific to the output port, the receivers each having an input respectively connected to a port of one of the p couplers (Σ1, ..., Σp),
-- a buffer (Qj) having p inputs respectively connected to the outputs of the p receivers and an output connected to an output of the matrix, and
**characterised in that** said matrix includes distributed allocation means (Fja, Ljr, Fir, Lia) adapted to control the switching means (Si1, ..., Sip) of each input port (IPi) to connect, to k separate couplers, k respective input ports which at the time concerned are receiving k cells addressed to the same output port (OPj), k being less than or equal to p, this operation being repeated for each output port.

2. Matrix according to claim 1, **characterised in that** the allocation means include:
- in each input port (IPi), request means (Lia) for sending a coupler allocation request message each time that a cell is received by the input port, the message being sent at the wavelength specific to the output port (OPj) which is the destination of the cell and including the identifier of the input port (IPi),
- in each output port (OPj) means (Fja) for receiving a coupler allocation request message sent at a wavelength specific to the output port and containing the identifier of at least one requesting input port, means (Dj) for deciding whether or not to allocate a coupler, and means (Ljr; Ljr') for sending a response message containing the identifier of the allocated coupler and addressed to the requesting port, and
- in each input port (IPi), means (Fir; Fir') for receiving a response message addressed to the input port and for controlling the switching means (Si1, ..., Sip) of the input port so as to connect it to the coupler allocated to it.

## Patentansprüche

1. ATM-Schaltmatrix mit n Eingangsports (IP1, ..., IPn), einem passiven optischen Kern (Σ1, ..., Σp, Σa, Σr) und n Ausgangsports (OP1, ..., OPn), die jeweils einen elektronischen Pufferspeicher (Qj) enthalten;
wobei die Matrix so strukturiert ist, dass
- jeder Eingangsport (IPi) folgendes beinhaltet:
-- einen Eingang, der an einen Eingang der Matrix gekoppelt ist;
-- mindestens p Ausgänge, wobei p kleiner oder gleich n ist;
-- eine abstimmbare Lichtquelle (Lid) zum Senden eines optischen Signals, das Zellen transportiert, die an einem Eingang der Matrix empfangen werden;
-- Schaltungsmittel (Si1, ..., Sip), um das von der Quelle (Lid) gesendete optische Signal zu mindestens einem der p Ausgänge dieses Eingangsports weiter zu leiten;
- dass sie außerdem Abstimmungsmittel (TM) enthält, um die Abstimmung der abstimmbaren Lichtquelle (Lid) jedes Eingangsports zu steuern, so dass ihre Wellenlänge dem Ausgang der Matrix entspricht, der das Ziel der Zelle ist, die gerade vom betrachteten Eingangsport empfangen wird;
- der passive optische Kern mindestens p Optokoppler (Σ1, ..., Σp) enthält, wobei jeder Koppler 2n Zugänge hat, wobei n davon jeweils an einen Ausgang jedes der n Eingangsports (IP1, ..., IPn) angeschlossen sind;
- jeder Ausgangsport folgendes beinhaltet:
-- mindestens p optische Empfänger (Fj1, ..., Fjp), die auf eine gleiche festgelegte Wellenlänge abgestimmt sind, die diesem Ausgangsport eigen ist, wobei diese Empfänger jeweils einen Eingang haben, der jeweils mit einem Zugang von einem der p Koppler (Σ1, ..., Σp)verbunden ist,
-- einen Pufferspeicher (Qj), der p Eingänge hat, die jeweils gekoppelt sind an die Ausgänge der p Empfänger, und einen Ausgang, der gekoppelt ist an einen Ausgang der Matrix;
und **dadurch gekennzeichnet, dass** sie verteilte Zuweisungsmittel (Fja, Ljr, Fir, Lia) enthält, um die Schaltungsmittel (Si1, ..., Sip) jedes Eingangsports (IPi) so zu steuern, dass mit k verschiedenen Kopplern jeweils k Eingangsports verbunden werden, die zum betrachteten Zeitpunkt k Zellen empfangen, die für ein und denselben Ausgangsport (OPj) bestimmt sind, wobei k kleiner oder gleich p ist; dieser Vorgang wird für jeden Ausgangsport wiederholt.

2. Matrix gemäß Anspruch 1, **dadurch gekennzeichnet, dass** die Zuweisungsmittel folgendes beinhalten:
- in jedem Eingangsport (IPi) Mittel zum Anfordern (Lia), um eine Meldung hinsichtlich Zuweisungsanforderung eines Kopplers zu senden, jedes Mal, wenn eine Zelle von diesem Eingangsport empfangen wird, wobei diese Meldung auf der Wellenlänge gesendet wird, die dem Ausgangsport (OPj) eigen ist, welcher das Ziel dieser Zelle ist, und diese Meldung die Kennung dieses Eingangsports (IPi) einschließt;
- in jedem Ausgangsport (OPj) Mittel (Fja) zum Empfangen einer Meldung hinsichtlich Zuweisungsanforderung eines Kopplers, gesendet auf einer diesem Ausgangsport eigenen Wellenlänge und die Kennung von mindestens einem anfordernden Eingangsport enthaltend; Mittel (Dj) für die Entscheidung über die Zuweisung oder Nichtzuweisung eines Kopplers; und Mittel (Ljr; Ljr'), um eine Antwortmeldung zu senden, welche die Kennung des zugewiesenen Kopplers enthält und an den anfordernden Port adressiert ist;
- in jedem Eingangsport (IPi) Mittel (Fir; Fir') zum Empfangen einer Antwortmeldung, die an diesen Eingangsport adressiert ist, und zum Steuern der Schaltungsmittel (Si1, ..., Sip) dieses Eingangsports, so dass er mit dem Koppler verbunden wird, der ihm zugewiesen ist.
